# EUROPEAN PATENT SPECIFICATION

(11) **EP 3 190 749 B1**
(45) Date of publication and mention of the grant of the patent: **06.11.2019**
(21) Application number: 14903004.1
(22) Date of filing: 29.09.2014
(51) Int. Cl.: H04L 12/70, H04L 12/801, H04L 12/825, H04L 12/26, H04L 5/00

(54) **TRAFFIC CONTROL METHOD AND SYSTEM**
VERFAHREN UND SYSTEM ZUR VERKEHRSSTEUERUNG
PROCÉDÉ ET SYSTÈME DE COMMANDE DE TRAFIC

(43) Date of publication of application: 12.07.2017
(73) Proprietor: Huawei Technologies Co., Ltd., Longgang District Shenzhen, Guangdong 518129 (CN)
(72) Inventor: YANG, Jinli, Shenzhen Guangdong 518129 (CN); LAN, Haiqing, Shenzhen Guangdong 518129 (CN); LUO, Jing, Shenzhen Guangdong 518129 (CN); NI, Rui, Shenzhen Guangdong 518129 (CN)
(74) Representative: Körber, Martin Hans
(86) International application number: PCT/CN2014/087787
(87) International publication number: WO 2016/049809

(56) References cited:
- WO-A1-2011/000311
- WO-A2-02/19654
- WO-A2-2004/114569
- CN-A- 101 645 765
- CN-A- 101 938 400
- US-A1- 2007 076 598
- US-A1- 2007 147 245
- US-A1- 2007 177 502

## Description

### TECHNICAL FIELD

The present invention relates to the field of network communications technologies, and in particular, to a traffic control method and system.

### BACKGROUND

A packet loss phenomenon often occurs in a wireless communications network. Packet loss may be caused by congestion (that is, packet loss caused by congestion), or may be caused by a bit error of a transmission link (that is, packet loss caused by a bit error). When a congestion control module at a service layer detects the packet loss, if the packet loss is always handled as packet loss caused by congestion, network bandwidth utilization may be decreased. Therefore, to improve transmission performance of the wireless communications network, when the packet loss occurs, the congestion control module needs to be able to learn a cause of packet loss, that is, to determine whether the packet loss is caused by a bit error or caused by congestion.

In the related art, one solution is to dispose a packet loss type determining module at a transport layer. The module can determine a cause of packet loss by using an algorithm and according to a feature (such as a latency or a jitter) of a received packet, and report a determining result (such as packet loss caused by congestion or packet loss caused by a bit error) to a congestion control module at a service layer, so that the congestion control module instantly takes a corresponding measure to control traffic. For example, when detecting that the determining result is packet loss caused by a bit error, the congestion control module increases a service transmission rate; or when detecting that the determining result is packet loss caused by congestion, the congestion control module decreases a service transmission rate.

However, because of a complex topology and diversified network states of a wireless network topology, a cause of packet loss is often incorrectly determined by using such a solution in the related art, thereby leading to incorrect traffic control and bringing about an adverse consequence. For example, packet loss caused by congestion is incorrectly determined as packet loss caused by a bit error, and then a service rate is incorrectly increased, thereby resulting in severer packet loss; or packet loss caused by a bit error is incorrectly determined as packet loss caused by congestion, and then a service rate is incorrectly decreased, thereby resulting in decreased network bandwidth utilization.
WO 2011/000311 A1 discloses a method and a device for network congestion control.
WO 02/19654 A2 discloses a method for improving TCP performance over wireless links.

US 2007/076598 A1 discloses a method and device which prevents the activation of a congestion controlling process by discerning the cause of packet losses between congestion related and non-congestion related (e.g. bit errors, link errors, and the like).

### SUMMARY

Embodiments of the present invention provide a traffic control method and system, so as to resolve a problem of incorrect traffic control because of incorrect determining. The embodiments of the present invention disclose the following technical solutions: According to a first aspect, a traffic control system is provided, where the system includes:a packet loss cause determining module, configured to determine a cause of packet loss, wherein the packet loss cause determining module includes:a packet loss cause obtaining submodule, configured to separately obtain at least two determining results of the cause of packet loss, where the determining result of the cause of packet loss is packet loss caused by a bit error or packet loss caused by congestion; anda joint distinguishing submodule, configured to select, according to the at least two determining results and a preset selection algorithm, one from packet loss caused by a bit error and packet loss caused by congestion as the cause of packet loss;a traffic control module, configured to control traffic according to the cause of packet loss that is determined by the packet loss cause determining module; and an error correction module, configured to: obtain a traffic control result obtained after the traffic control module controls the traffic, and correct, according to a comparison between the obtained traffic control result and an expected traffic control result, the cause of packet loss that is determined by the packet loss cause determining module, wherein

the error correction module includes: a control result obtaining submodule, configured to obtain the traffic control result obtained after the traffic control module controls the traffic;an error correction result obtaining submodule, configured to obtain an error correction result of the cause of packet loss according to the comparison between the obtained traffic control result and the expected traffic control result, where the error correction result is packet loss caused by a bit error or packet loss caused by congestion; and an error correction result output submodule, configured to output the error correction result to the packet loss cause determining module, so that the packet loss cause determining module adds the error correction result to the at least two determining results and re-performs the step of selecting, so as to obtain the corrected cause of packet loss.

With reference to the first aspect, in a first possible implementation manner of the first aspect, the packet loss cause obtaining submodule is configured to: separately obtain one determining result of the cause of packet loss according to at least two preset packet loss type distinguishing algorithms.

With reference to the first aspect, in a second possible implementation manner of the first aspect, the preset selection algorithm includes:if more than half of determining results in the at least two determining results are packet loss caused by congestion, determining that the cause of packet loss is packet loss caused by congestion; or if not more than half of determining results in the at least two determining results are packet loss caused by congestion, determining that the cause of packet loss is packet loss caused by a bit error.

With reference to the first aspect, in a third possible implementation manner of the first aspect, the traffic control result includes a specified parameter; and
the error correction result obtaining submodule is configured to:
obtain a change tendency of the specified parameter by comparing an obtained value of the specified parameter with an expected value of the specified parameter; and
select, from packet loss caused by a bit error and packet loss caused by congestion, the cause of packet loss consistent with the change tendency as the error correction result.

With reference to the first aspect, in a fourth possible implementation manner of the first aspect, the traffic control module is configured to:
when the determined cause of packet loss is packet loss caused by congestion, decrease a service transmission rate; or
when the determined cause of packet loss is packet loss caused by a bit error, increase a service transmission rate.

According to a second aspect, a traffic control method is provided, where the method includes:
determining a cause of packet loss, wherein the determining a cause of packet loss includes:
   separately obtaining at least two determining results of the cause of packet loss, where the determining result of the cause of packet loss is packet loss caused by a bit error or packet loss caused by congestion; and
   selecting, according to the at least two determining results and a preset selection algorithm, one from packet loss caused by a bit error and packet loss caused by congestion as the cause of packet loss;
controlling traffic according to the determined cause of packet loss;
obtaining a traffic control result; and
correcting the determined cause of packet loss according to a comparison between the obtained traffic control result and an expected traffic control result, so as to control the traffic again, wherein
the correcting the determined cause of packet loss according to a comparison between the obtained traffic control result and an expected traffic control result includes:
   obtaining an error correction result of the cause of packet loss according to the comparison, where the error correction result is packet loss caused by a bit error or packet loss caused by congestion; and
   adding the error correction result to the at least two determining results, and re-performing a step of selecting, according to the at least two determining results and the preset selection algorithm, one from packet loss caused by a bit error and packet loss caused by congestion as the cause of packet loss, so as to obtain the corrected cause of packet loss.

With reference to the second aspect, in a first possible implementation manner of the second aspect, the separately obtaining at least two determining results of the cause of packet loss includes:
separately obtaining one determining result of the cause of packet loss according to at least two preset packet loss type distinguishing algorithms.

With reference to the second aspect, in a second possible implementation manner of the second aspect, the preset selection algorithm includes:
if more than half of determining results in the at least two determining results are packet loss caused by congestion, determining that the cause of packet loss is packet loss caused by congestion; or if not more than half of determining results in the at least two determining results are packet loss caused by congestion, determining that the cause of packet loss is packet loss caused by a bit error.

With reference to the second aspect, in a third possible implementation manner of the second aspect, the traffic control result includes a specified parameter; and
the obtaining an error correction result of the cause of packet loss according to the comparison includes:
obtaining a change tendency of the specified parameter by comparing an obtained value of the specified parameter with an expected value of the specified parameter; and
selecting, from packet loss caused by a bit error and packet loss caused by congestion, the cause of packet loss consistent with the change tendency as the error correction result.

With reference to the second aspect, in a fourth possible implementation manner of the second aspect, the controlling traffic according to the determined cause of packet loss includes:
when the determined cause of packet loss is packet loss caused by congestion, decreasing a service transmission rate; or
when the determined cause of packet loss is packet loss caused by a bit error, increasing a service transmission rate.

According to a third aspect, a traffic control system is provided, where the system includes at least one processor and at least one memory;
the memory is configured to store a program or an instruction; and
the processor is configured to invoke the program or the instruction stored in the memory to perform the following operations:
   determining a cause of packet loss, wherein the determining a cause of packet loss comprises:
      separately obtaining at least two determining results of the cause of packet loss, wherein the determining result of the cause of packet loss is packet loss caused by a bit error or packet loss caused by congestion; and
      selecting, according to the at least two determining results and a preset selection algorithm, one from packet loss caused by a bit error and packet loss caused by congestion as the cause of packet loss;
   controlling traffic according to the determined cause of packet loss;
   obtaining a traffic control result; and
   correcting the determined cause of packet loss according to a comparison between the obtained traffic control result and an expected traffic control result, so as to control the traffic again, wherein the correcting the determined cause of packet loss according to a comparison between the obtained traffic control result and an expected traffic control result comprises:
      obtaining an error correction result of the cause of packet loss according to the comparison, wherein the error correction result is packet loss caused by a bit error or packet loss caused by congestion; and
      adding the error correction result to the at least two determining results, and re-performing a step of selecting, according to the at least two determining results and the preset selection algorithm, one from packet loss caused by a bit error and packet loss caused by congestion as the cause of packet loss, so as to obtain the corrected cause of packet loss.

The technical solutions provided in the embodiments of the present invention may include the following beneficial effects:
In the embodiments of the present invention, an error correction mechanism is established as follows: After traffic is preliminarily controlled, an error is corrected based on a traffic control result, that is, a previously determined cause of packet loss is corrected, and then the traffic is controlled again. An error occurring during determining of a cause of packet loss can be instantly corrected by using this error correction mechanism, so as to improve accuracy of determining the cause of packet loss, and implement accurate traffic control.

In addition, in the embodiments of the present invention, during the determining of the cause of packet loss, a decision is made on the basis of multiple packet loss cause algorithms, and advantages of all the algorithms are integrated to improve determining accuracy to the most extent and adapt to more scenarios.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a block diagram of a traffic control system according to an embodiment of the present invention;
FIG. 2 is a block diagram of a traffic control system according to an embodiment of the present invention;
FIG. 3 is a schematic diagram of obtaining multiple determining results according to an embodiment of the present invention;
FIG. 4 is a schematic diagram of adding an error correction result to multiple previous determining results according to an embodiment of the present invention;
FIG. 5 is a schematic diagram of a network that is applied in an embodiment of the present invention;
FIG. 6 is a schematic diagram of system running according to an embodiment of the present invention;
FIG. 7 is a flowchart of a traffic control method according to an embodiment of the present invention;
FIG. 8 is a flowchart of a traffic control method according to an embodiment of the present invention;
FIG. 9 is a flowchart of a traffic control method according to an embodiment of the present invention; and

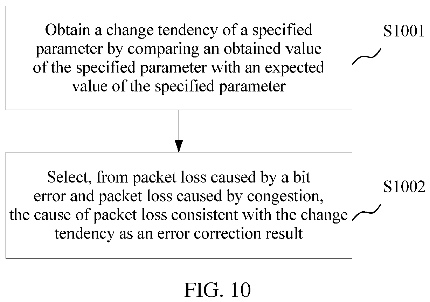

FIG. 10 is a flowchart of a traffic control method according to an embodiment of the present invention.

### DESCRIPTION OF EMBODIMENTS

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

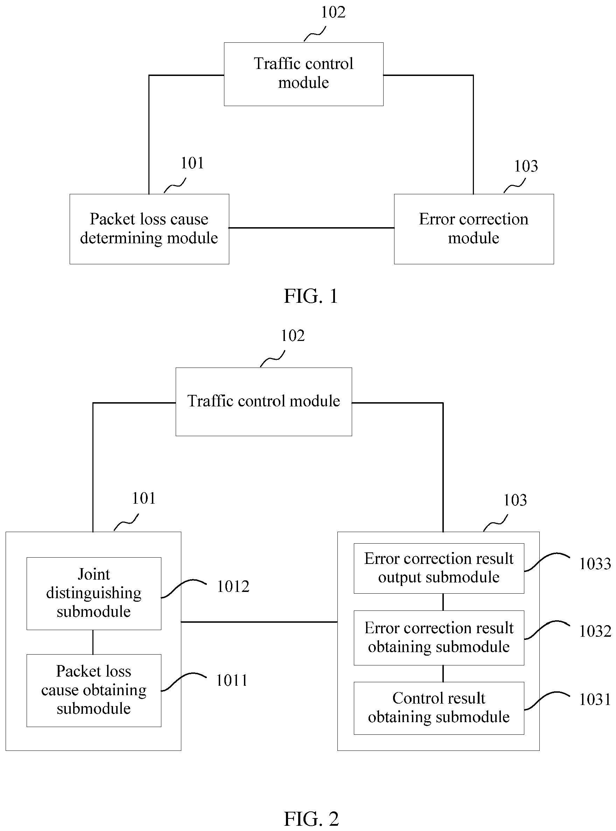

FIG. 1 is a block diagram of a traffic control system according to an embodiment of the present invention. Referring to FIG. 1, the system may include: a packet loss cause determining module 101, a traffic control module 102, and an error correction module 103.

The packet loss cause determining module 101 is configured to determine a cause of packet loss.

In this embodiment, an algorithm for determining the cause of packet loss may be selected according to a specific scenario; for example, the cause of packet loss may be determined based on a change tendency of a difference between a monitored latency and a non-congestion latency. A specific method for determining the cause of packet loss is not limited in this embodiment.

The traffic control module 102 is configured to control traffic according to the cause of packet loss that is determined by the packet loss cause determining module 101.

The traffic control module performs traffic control on a network based on an input cause of packet loss. As an example, in this embodiment or some other embodiments of the present invention, the traffic control module 102 may be specifically configured to:
when the determined cause of packet loss is packet loss caused by congestion, decrease a service transmission rate; or
when the determined cause of packet loss is packet loss caused by a bit error, increase a service transmission rate.

The error correction module 103 is configured to: obtain a traffic control result obtained after the traffic control module 102 controls the traffic, and correct, according to a comparison between the obtained traffic control result and an expected traffic control result, the cause of packet loss that is determined by the packet loss cause determining module.

After corresponding traffic control is performed on the network according to the determined cause of packet loss, some results are brought about, or some changes are caused, for example, a change of some network parameters. These results or changes may be referred to as the traffic control result. The traffic control result may be specifically reflected as a change of these network parameters.

If the determined cause of packet loss is correct, the results that are brought about or the changes that are caused should also meet expectation. These expected results or changes may be referred to as the expected traffic control result.

Therefore, if the packet loss cause determining module previously correctly determines the cause of packet loss, the currently obtained traffic control result should be consistent with the expected traffic control result; or if it is detected, by means of comparison, that the currently obtained traffic control result is inconsistent with the expected traffic control result, it indicates that the previously determined cause of packet loss is likely to be incorrect, and therefore, the cause of packet loss should be fed back for performing correction, so as to form closed-loop control.

In this embodiment, an error correction mechanism is established as follows: After traffic is preliminarily controlled, an error is corrected based on a traffic control result, that is, a previously determined cause of packet loss is corrected, and then the traffic is controlled again. An error occurring during determining of a cause of packet loss can be instantly corrected by using this error correction mechanism, so as to improve accuracy of determining the cause of packet loss, and implement accurate traffic control. FIG. 2 is a block diagram of a traffic control system according to an embodiment of the present invention. This embodiment may be based on a previous embodiment, and describes, in more detail, the packet loss cause determining module 101 and the error correction module 103 in the previous embodiment.

Referring to FIG. 2, the packet loss cause determining module 101 may include: a packet loss cause obtaining submodule 1011 and a joint distinguishing submodule 1012. The packet loss cause obtaining submodule 1011 is configured to separately obtain at least two determining results of a cause of packet loss, where the determining result of the cause of packet loss is packet loss caused by a bit error or packet loss caused by congestion.

In this embodiment, when obtaining the cause of packet loss, the packet loss cause obtaining submodule is not limited to obtaining only one determining result (packet loss caused by congestion or packet loss caused by a bit error); instead, the packet loss cause obtaining submodule obtains the at least two determining results in various manners (for example, various algorithms are used).

As an example, in this embodiment or some other embodiments of the present invention, the packet loss cause obtaining submodule 1011 may be specifically configured to:
separately obtain one determining result of the cause of packet loss according to at least two preset packet loss type distinguishing algorithms.

If only one packet loss type distinguishing algorithm is used, there is a possibility of incorrect determining, or the cause of packet loss cannot be identified in a specific scenario. Therefore, in this embodiment, at least two packet loss type distinguishing algorithms are used to separately obtain one determining result of the cause of packet loss, and then subsequent processing is performed on the basis of the determining result.

As an example, a preset packet loss type distinguishing algorithm may include:
a packet loss type distinguishing algorithm based on a packet loss rate, a latency, and a jitter, a packet loss type distinguishing algorithm based on a packet interval change intensity, a packet loss type distinguishing algorithm based on a change tendency of a difference between a latency and a non-congestion latency, and the like. A calculation may be performed by using these packet loss type distinguishing algorithms, so as to separately obtain one determining result of the cause of packet loss. The preset packet loss type distinguishing algorithm may include any quantity of different packet loss type distinguishing algorithms, and is used to meet requirements in different scenarios, and an adjustment such as increasing, decreasing, or replacement may be further performed according to a specific scenario. This is not limited in this embodiment.

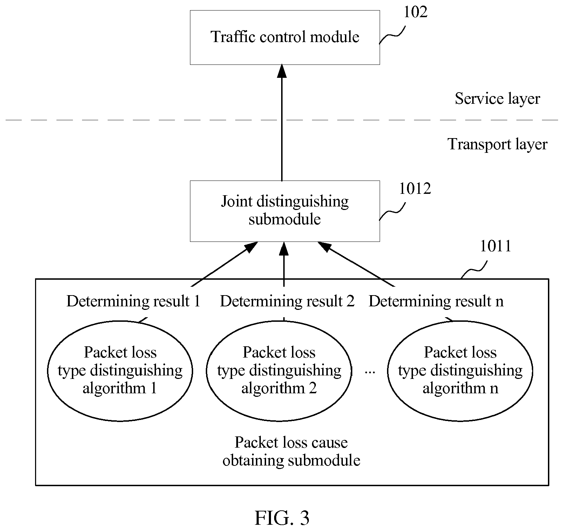

The joint distinguishing submodule 1012 is configured to select, according to the at least two determining results and a preset selection algorithm, one from packet loss caused by a bit error and packet loss caused by congestion as the cause of packet loss. As an example, refer to FIG. 3. In FIG. 3, a packet loss cause obtaining submodule located at a transport layer may separately obtain a determining result of a cause of packet loss by using a packet loss type distinguishing algorithm 1, a packet loss type distinguishing algorithm 2, ..., a packet loss type distinguishing algorithm n, and the like, and then determining results are input to a joint distinguishing submodule. The joint distinguishing submodule performs integration on the basis of these n obtained determining results. Finally, the joint distinguishing submodule determines one from packet loss caused by a bit error and packet loss caused by congestion as a final determining result of the cause of packet loss, and inputs the final determining result to a traffic control module at a service layer.

This embodiment imposes no limitation on how the joint distinguishing submodule integrates all input determining results or selects all input determining results according to a selection algorithm. As an example, in this embodiment or some other embodiments of the present invention, the preset selection algorithm may include:
if more than half of determining results in the at least two determining results are packet loss caused by congestion, determining that the cause of packet loss is packet loss caused by congestion; or if not more than half of determining results in the at least two determining results are packet loss caused by congestion, determining that the cause of packet loss is packet loss caused by a bit error.

Still refer to FIG. 2. The error correction module 103 may include: a control result obtaining submodule 1031, an error correction result obtaining submodule 1032, and an error correction output submodule 1033.

The control result obtaining submodule 1031 is configured to obtain the traffic control result obtained after the traffic control module controls the traffic.

For example, the traffic control result may include a specified parameter. The traffic control result obtained after the traffic control module controls the traffic is obtained, that is, current values of these specified parameters are obtained.

The error correction result obtaining submodule 1032 is configured to obtain an error correction result of the cause of packet loss according to the comparison between the obtained traffic control result and the expected traffic control result, where the error correction result is packet loss caused by a bit error or packet loss caused by congestion. In essence, the error correction result is also the determining result of the cause of packet loss. Only a generation manner of the error correction result is different from a generation manner of other determining results. The other determining results are all calculated by using a corresponding algorithm, but the error correction result is obtained by comparing the currently obtained traffic control result with the expected traffic control result.

In this embodiment or some other embodiments of the present invention, the error correction result obtaining submodule 1032 may be specifically configured to:
obtain a change tendency of the specified parameter by comparing an obtained value of the specified parameter with an expected value of the specified parameter; and
select, from packet loss caused by a bit error and packet loss caused by congestion, the cause of packet loss consistent with the change tendency as the error correction result.

After obtaining the determining result of the cause of packet loss from the packet loss cause determining module, the traffic control module may take a corresponding traffic control measure, and notifies the error correction module of the taken measure and an expected change tendency of related network parameters. Then, the error correction module may determine, by monitoring a network, whether the change tendency of these network parameters (such as a latency, a jitter, and a packet loss rate) meets the expectation, so as to determine whether the traffic control module performs correct control, that is, whether the cause of packet loss previously determined by the packet loss cause determining module is accurate.

For example:
After the traffic control module decreases a service layer rate, if the determined cause of packet loss is packet loss caused by congestion, an expected result should be as follows: a packet loss rate or a latency should tend to be decreased; or if the determined cause of packet loss is packet loss caused by a bit error, an expected result should be as follows: a packet loss rate or a latency should tend to be basically unchanged or increased;
on the contrary, after the traffic control module increases a service layer rate, if the determined cause of packet loss is packet loss caused by congestion, an expected result should be as follows: a packet loss rate or a latency should tend to be increased; or if the determined cause of packet loss is packet loss caused by a bit error, an expected result should be as follows: a packet loss rate or a latency should tend to be basically unchanged or decreased.

If the error correction module detects, by monitoring the related network parameters, that a change of these network parameters does not meet the expectation, it indicates that an error occurs during the determining. For example, the packet loss cause determining module considers that packet loss caused by a bit error occurs, and then the service layer rate is increased. However, it is detected, by monitoring, that the packet loss rate is increased instead of being decreased, and the packet loss rate does not meet the expectation. Therefore, it indicates that previous determining is incorrect, and the determining result may be packet loss caused by congestion. The error correction module uses the determining result as the error correction result, and instantly feeds back the error correction result to the packet loss cause determining module.

The error correction result output submodule 1033 is configured to output the error correction result to the packet loss cause determining module, so that the packet loss cause determining module adds the error correction result to the at least two determining results.

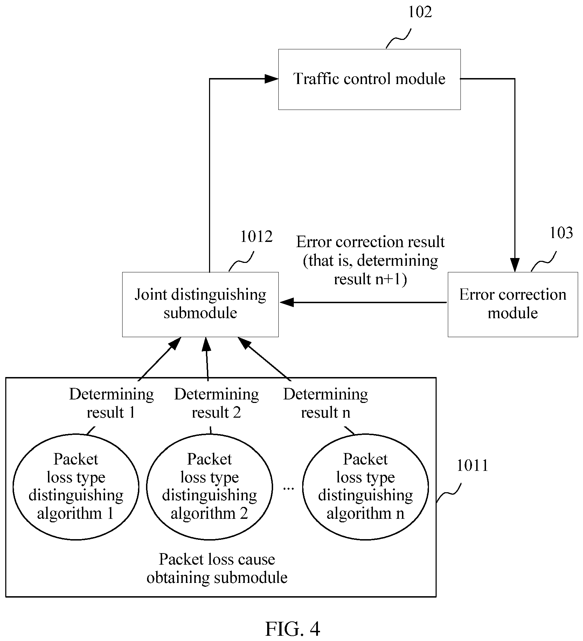

As an example, refer to FIG. 4. An error correction result given by the error correction module is transmitted to the joint distinguishing submodule in the packet loss cause determining module, that is, the error correction result is used as the (n+1)^{th} determining result, and is re-integrated with the previous n determining results. Then, the determined cause of packet loss is re-reported to the traffic control module, and this cycle is repeated.

In this embodiment, an error correction mechanism is established as follows: After traffic is preliminarily controlled, an error is corrected based on a traffic control result, that is, a previously determined cause of packet loss is corrected, and then the traffic is controlled again. An error occurring during determining of a cause of packet loss can be instantly corrected by using this error correction mechanism, so as to improve accuracy of determining the cause of packet loss, and implement accurate traffic control. In addition, in this embodiment, during the determining of the cause of packet loss, a decision is made on the basis of multiple packet loss cause algorithms, and advantages of all the algorithms are integrated to improve determining accuracy to the most extent and adapt to more scenarios.

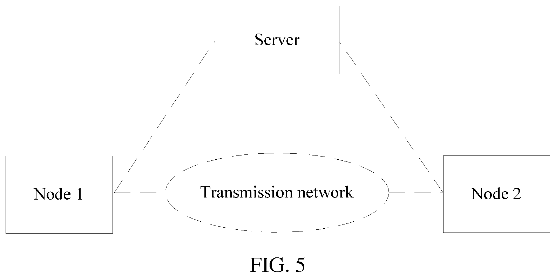

Next, a deployment status of each module in the foregoing embodiment is described. FIG. 5 is a schematic diagram of a network that is applied in an embodiment of the present invention. The network involves four parts:
Node 1: The node 1 may be used as a source node to send a packet;
Node 2: The node 2 may be used as a destination node to receive the packet;
Transmission network: The transmission network is a transmission network used to transmit the packet; and
Server: The server is configured to maintain a local network. A deployment location of the server is not limited; for example, there may be the following five deployment forms: i) independent deployment; ii) deployment on the source node; iii) deployment on the destination transmission node; iv) deployment on the transmission network; or v) deployment on another node of the local network.

In this embodiment, a deployment location of each module (which includes a submodule) is not limited either. As an example, there may be the following several deployment forms:
a) all modules are deployed on the node 1; or
b) all modules are deployed on the node 2; or
c) all modules are deployed on the transmission network; or
d) all modules are deployed on the server; or
e) a packet loss cause determining module is deployed on the node 1, and an error correction module and a traffic control module are deployed on the node 2; or
f) a packet loss cause determining module is deployed on the node 1, an error correction module is deployed on the node 2, and a traffic control module is deployed on the server.

Further, the following uses the foregoing deployment f) as an example to describe the present invention.

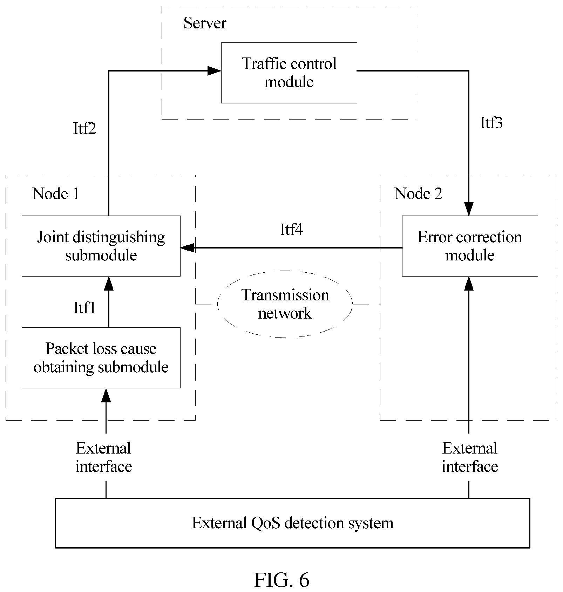

FIG. 6 is a schematic diagram of system running according to an embodiment of the present invention.
1) A packet loss cause obtaining submodule deployed on the node 1 obtains, by using an external interface, QoS information such as a latency, a jitter, a packet loss rate, and a service transmission rate from an external QoS detection system for use by each packet loss type distinguishing algorithm.
2) The packet loss cause obtaining submodule reports, by using the Itf1 interface, a determining result of a cause of packet loss obtained by using each packet loss type distinguishing algorithm to a joint distinguishing submodule that is also deployed on the node 1.
3) The joint distinguishing submodule separately selects various determining results of the cause of packet loss by using a preset selection algorithm by means of integration, so as to determine the cause of packet loss (packet loss caused by congestion or packet loss caused by a bit error). Then, the determined cause of packet loss is reported, by using the Itf2 interface, to the traffic control module deployed on the server.
4) The traffic control module takes a corresponding traffic control measure according to a received determining result of the cause of packet loss, for example, if the received determining result is packet loss caused by congestion, a service transmission rate is decreased; or if the received determining result is packet loss caused by a bit error, a service transmission rate is increased. The traffic control module further transmits, by using the Itf3 interface, the taken traffic control measure and an expected change tendency of related network parameters to the error correction module deployed on the node 2.
5) The error correction module obtains a current QoS parameter from the external QoS detection system by using an external interface, and corrects a packet loss type according to whether a change tendency of the QoS parameter of the transmission network meets an expectation after the traffic control module takes a control measure, so as to obtain an error correction result (packet loss caused by congestion or packet loss caused by a bit error). Then, the error correction result is transmitted to the joint distinguishing submodule by using the Itf4 interface.
6) The joint distinguishing submodule re-integrates together the error correction result sent by the error correction module and each determining result reported by the packet loss cause obtaining submodule, so as to re-determine the cause of packet loss; and then reports to the traffic control module. The cycle is repeated to form closed-loop control.
In addition, the following describes a status of each interface in the system.

Itf1: Itf1 is an interface between the packet loss cause obtaining submodule and the joint distinguishing submodule.

The packet loss cause obtaining submodule transmits, by using the Itf1 interface, the determining result obtained by the packet loss cause obtaining submodule by using each packet loss type distinguishing algorithm to the joint distinguishing submodule. Interface information of the Itf1 interface includes a determining result of a packet loss type of each algorithm: determining result 1, determining result 2, ..., and determining result n. Determining result i (1≤i≤n) includes packet loss type information (packet loss caused by congestion or packet loss caused by a bit error), but is not limited to including only the packet loss type information.

Itf2: Itf2 is an interface between the joint distinguishing submodule and the traffic control module.

The joint distinguishing submodule transmits the determined cause of packet loss to the traffic control module by using the Itf2 interface. Interface information of the Itf2 interface includes packet loss type information (packet loss caused by congestion or packet loss caused by a bit error), but is not limited to including only the packet loss type information.

Itf3: Itf3 is an interface between the traffic control module and the error correction module.

The traffic control module transmits, by using the Itf3 interface, some information (such as the taken traffic control measure and an expected change tendency of related network parameters) required by the error correction module during an error correction to the error correction module. Interface information of the Itf3 interface is not limited in the present invention.

Itf4: Itf4 is an interface between the error correction module and the joint distinguishing submodule.

The error correction module transmits the error correction result to the joint distinguishing submodule by using the Itf4 interface. Interface information of the Itf4 interface includes packet loss type information (packet loss caused by congestion or packet loss caused by a bit error), but is not limited to including only the packet loss type information.

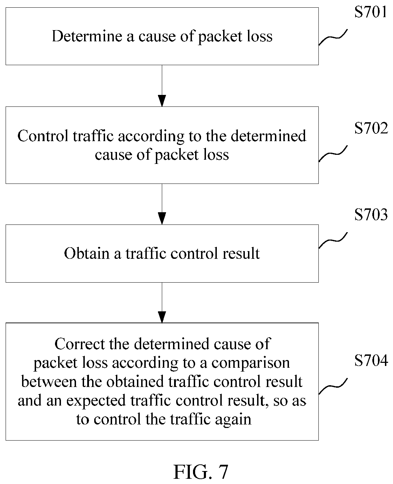

FIG. 7 is a flowchart of a traffic control method according to an embodiment of the present invention. This embodiment may be corresponding to the foregoing system embodiments. Referring to FIG. 7, the method may include:
Step S701: Determine a cause of packet loss.
Step S702: Control traffic according to the determined cause of packet loss.

In one scenario, the controlling traffic according to the determined cause of packet loss may include:
when the determined cause of packet loss is packet loss caused by congestion, decreasing a service transmission rate; or
when the determined cause of packet loss is packet loss caused by a bit error, increasing a service transmission rate.

Step S703: Obtain a traffic control result.

Step S704: Correct the determined cause of packet loss according to a comparison between the obtained traffic control result and an expected traffic control result, so as to control the traffic again.

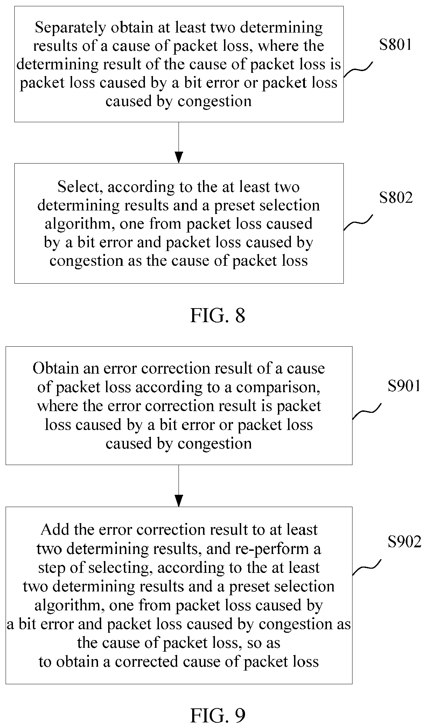

Referring to FIG. 8, in this embodiment or some other embodiments of the present invention, the determining a cause of packet loss may include:
Step S801: Separately obtain at least two determining results of the cause of packet loss, where the determining result of the cause of packet loss is packet loss caused by a bit error or packet loss caused by congestion.

In specific implementation, the separately obtaining at least two determining results of the cause of packet loss may include:
separately obtaining one determining result of the cause of packet loss according to at least two preset packet loss type distinguishing algorithms.

Step S802: Select, according to the at least two determining results and a preset selection algorithm, one from packet loss caused by a bit error and packet loss caused by congestion as the cause of packet loss.

As an example, in one scenario, the preset selection algorithm may include:
if more than half of determining results in the at least two determining results are packet loss caused by congestion, determining that the cause of packet loss is packet loss caused by congestion; or if not more than half of determining results in the at least two determining results are packet loss caused by congestion, determining that the cause of packet loss is packet loss caused by a bit error.

Referring to FIG. 9, in this embodiment or some other embodiments of the present invention, the correcting the determined cause of packet loss according to a comparison between the obtained traffic control result and an expected traffic control result may include:
Step S901: Obtain an error correction result of the cause of packet loss according to the comparison, where the error correction result is packet loss caused by a bit error or packet loss caused by congestion.
Step S902: Add the error correction result to the at least two determining results, and re-perform a step of selecting, according to the at least two determining results and the preset selection algorithm, one from packet loss caused by a bit error and packet loss caused by congestion as the cause of packet loss, so as to obtain the corrected cause of packet loss.

As an example, the traffic control result may include a specified parameter. Referring to FIG, 10, the obtaining an error correction result of the cause of packet loss according to the comparison may include:
Step S1001: Obtain a change tendency of the specified parameter by comparing an obtained value of the specified parameter with an expected value of the specified parameter.
Step S1002: Select, from packet loss caused by a bit error and packet loss caused by congestion, the cause of packet loss consistent with the change tendency as the error correction result.

In this embodiment, an error correction mechanism is established as follows: After traffic is preliminarily controlled, an error is corrected based on a traffic control result, that is, a previously determined cause of packet loss is corrected, and then the traffic is controlled again. An error occurring during determining of a cause of packet loss can be instantly corrected by using this error correction mechanism, so as to improve accuracy of determining the cause of packet loss, and implement accurate traffic control. In addition, in this embodiment, during the determining of the cause of packet loss, a decision is made on the basis of multiple packet loss cause algorithms, and advantages of all the algorithms are integrated to improve determining accuracy to the most extent and adapt to more scenarios.

For the foregoing method embodiments, specific content involved in each step thereof has been described in detail in the related system embodiments, and details are not described herein again.

An embodiment of the present invention further discloses a traffic control system. This embodiment is corresponding to the foregoing system and method embodiments. In this embodiment, the system includes at least one processor and at least one memory.

The memory is configured to store a program or an instruction.

The processor is configured to invoke the program or the instruction stored in the memory to perform the following operations:
determining a cause of packet loss;
controlling traffic according to the determined cause of packet loss;
obtaining a traffic control result; and
correcting the determined cause of packet loss according to a comparison between the obtained traffic control result and an expected traffic control result, so as to control the traffic again.

It may be learned that there may be two or even more processors or memories in this embodiment from above description of a deployment status of each module. In this case, these processors or memories may be distributed on a same node or distributed on different nodes, sharing together a role played by the foregoing at least one processor or the foregoing at least one memory.

In this embodiment or some other embodiments of the present invention:
when being configured to determine the cause of packet loss, the at least one processor specifically includes:
separately obtaining at least two determining results of the cause of packet loss, where the determining result of the cause of packet loss is packet loss caused by a bit error or packet loss caused by congestion; and
selecting, according to the at least two determining results and a preset selection algorithm, one from packet loss caused by a bit error and packet loss caused by congestion as the cause of packet loss.

Correspondingly, when being configured to correct the determined cause of packet loss according to the comparison between the obtained traffic control result and the expected traffic control result, the at least one processor is configured to:
obtain an error correction result of the cause of packet loss according to the comparison, where the error correction result is packet loss caused by a bit error or packet loss caused by congestion; and
add the error correction result to the at least two determining results, and re-perform a step of selecting, according to the at least two determining results and the preset selection algorithm, one from packet loss caused by a bit error and packet loss caused by congestion as the cause of packet loss, so as to obtain the corrected cause of packet loss.

In this embodiment or some other embodiments of the present invention, when being configured to separately obtain the at least two determining results of the cause of packet loss, the at least one processor specifically includes:
separately obtaining one determining result of the cause of packet loss according to at least two preset packet loss type distinguishing algorithms.

The preset selection algorithm includes:
if more than half of determining results in the at least two determining results are packet loss caused by congestion, determining that the cause of packet loss is packet loss caused by congestion; or if not more than half of determining results in the at least two determining results are packet loss caused by congestion, determining that the cause of packet loss is packet loss caused by a bit error.

In this embodiment or some other embodiments of the present invention, the traffic control result includes a specified parameter. When being configured to obtain the error correction result of the cause of packet loss according to the comparison, the at least one processor is configured to:
obtain a change tendency of the specified parameter by comparing an obtained value of the specified parameter with an expected value of the specified parameter; and
select, from packet loss caused by a bit error and packet loss caused by congestion, the cause of packet loss consistent with the change tendency as the error correction result.

In this embodiment, an error correction mechanism is established as follows: After traffic is preliminarily controlled, an error is corrected based on a traffic control result, that is, a previously determined cause of packet loss is corrected, and then the traffic is controlled again. An error occurring during determining of a cause of packet loss can be instantly corrected by using this error correction mechanism, so as to improve accuracy of determining the cause of packet loss, and implement accurate traffic control. In addition, in this embodiment, during the determining of the cause of packet loss, a decision is made on the basis of multiple packet loss cause algorithms, and advantages of all the algorithms are integrated to improve determining accuracy to the most extent and adapt to more scenarios.

The present invention can be described in the general context of executable computer instructions executed by a computer, for example, a program module. Generally, the program unit includes a routine, program, object, component, data structure, and the like for executing a particular task or implementing a particular abstract data type. The present invention may also be practiced in distributed computing environments in which tasks are performed by remote processing devices that are connected through a communications network. In a distributed computing environment, program modules may be located in both local and remote computer storage media including storage devices.

It should be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a..." does not, without more constraints, preclude the existence of additional identical elements in the process, method, article, or apparatus that includes the element.

## Claims

1. A traffic control system, wherein the system comprises:
a packet loss cause determining module (101), configured to determine a cause of packet loss, wherein the packet loss cause determining module (101) comprises:
a packet loss cause obtaining submodule (1011), configured to separately obtain at least two determining results of the cause of packet loss, wherein the determining result of the cause of packet loss is packet loss caused by a bit error or packet loss caused by congestion; and
a joint distinguishing submodule (1012), configured to select, according to the at least two determining results and a preset selection algorithm, one from packet loss caused by a bit error and packet loss caused by congestion as the cause of packet loss;
a traffic control module (102), configured to control traffic according to the cause of packet loss that is determined by the packet loss cause determining module; and
an error correction module (103), configured to: obtain a traffic control result obtained after the traffic control module controls the traffic, and correct, according to a comparison between the obtained traffic control result and an expected traffic control result, the cause of packet loss that is determined by the packet loss cause determining module, wherein the error correction module (103) comprises:
a control result obtaining submodule (1031), configured to obtain the traffic control result obtained after the traffic control module (102) controls the traffic;
an error correction result obtaining submodule (1032), configured to obtain an error correction result of the cause of packet loss according to the comparison between the obtained traffic control result and the expected traffic control result, wherein the error correction result is packet loss caused by a bit error or packet loss caused by congestion; and
an error correction result output submodule (1033), configured to output the error correction result to the packet loss cause determining module (101), so that the packet loss cause determining module (101) adds the error correction result to the at
least two determining results and re-performs the step of selecting, so as to obtain the corrected cause of packet loss.

2. The system according to claim 1, wherein the packet loss cause obtaining submodule (1011) is configured to:
separately obtain one determining result of the cause of packet loss according to at least two preset packet loss type distinguishing algorithms.

3. The system according to claim 1, wherein the preset selection algorithm comprises:
if more than half of determining results in the at least two determining results are packet loss caused by congestion, determining that the cause of packet loss is packet loss caused by congestion; or if not more than half of determining results in the at least two determining results are packet loss caused by congestion, determining that the cause of packet loss is packet loss caused by a bit error.

4. The system according to claim 1, wherein the traffic control result comprises a specified parameter; and
the error correction result obtaining submodule is configured to:
obtain a change tendency of the specified parameter by comparing an obtained value of the specified parameter with an expected value of the specified parameter; and
select, from packet loss caused by a bit error and packet loss caused by congestion, the cause of packet loss consistent with the change tendency as the error correction result.

5. The system according to claim 1, wherein the traffic control module is configured to:
when the determined cause of packet loss is packet loss caused by congestion, decrease a service transmission rate; or
when the determined cause of packet loss is packet loss caused by a bit error, increase a service transmission rate.

6. A traffic control method, wherein the method comprises:
determining (S701) a cause of packet loss, wherein the determining (S701) a cause of packet loss comprises:
separately obtaining (S801) at least two determining results of the cause of packet loss, wherein the determining result of the cause of packet loss is packet loss caused by a bit error or packet loss caused by congestion; and
selecting (S802), according to the at least two determining results and a preset selection algorithm, one from packet loss caused by a bit error and packet loss caused by congestion as the cause of packet loss;
controlling (S702) traffic according to the determined cause of packet loss;
obtaining (S703) a traffic control result; and
correcting (S704) the determined cause of packet loss according to a comparison between the obtained traffic control result and an expected traffic control result, so as to control the traffic again, wherein the correcting (S704) the determined cause of packet loss according to a comparison between the obtained traffic control result and an expected traffic control result comprises:
obtaining (S901) an error correction result of the cause of packet loss according to the comparison, wherein the error correction result is packet loss caused by a bit error or packet loss caused by congestion; and
adding (S902) the error correction result to the at least two determining results, and re-performing a step of selecting, according to the at least two determining results and the preset selection algorithm, one from packet loss caused by a bit error and packet loss caused by congestion as the cause of packet loss, so as to obtain the corrected cause of packet loss.

7. The method according to claim 6, wherein the separately obtaining (S801) at least two determining results of the cause of packet loss comprises:
separately obtaining one determining result of the cause of packet loss according to at least two preset packet loss type distinguishing algorithms.

8. The method according to claim 6, wherein the preset selection algorithm comprises:
if more than half of determining results in the at least two determining results are packet loss caused by congestion, determining that the cause of packet loss is packet loss caused by congestion; or if not more than half of determining results in the at least two determining results are packet loss caused by congestion, determining that the cause of packet loss is packet loss caused by a bit error.

9. The method according to claim 6, wherein the traffic control result comprises a specified parameter; and
the obtaining (S901) an error correction result of the cause of packet loss according to the comparison comprises:
obtaining (S1001) a change tendency of the specified parameter by comparing an obtained value of the specified parameter with an expected value of the specified parameter; and
selecting (S1002), from packet loss caused by a bit error and packet loss caused by congestion, the cause of packet loss consistent with the change tendency as the error correction result.

10. The method according to claim 6, wherein the controlling (S702) traffic according to the determined cause of packet loss comprises:
when the determined cause of packet loss is packet loss caused by congestion, decreasing a service transmission rate; or
when the determined cause of packet loss is packet loss caused by a bit error, increasing a service transmission rate.

11. A traffic control system, wherein the system comprises at least one processor and at least one memory;
the memory is configured to store a program or an instruction; and
the processor is configured to invoke the program or the instruction stored in the memory to perform the following operations:
determining a cause of packet loss, wherein the determining a cause of packet loss comprises:
separately obtaining at least two determining results of the cause of packet loss, wherein the determining result of the cause of packet loss is packet loss caused by a bit error or packet loss caused by congestion; and
selecting, according to the at least two determining results and a preset selection algorithm, one from packet loss caused by a bit error and packet loss caused by congestion as the cause of packet loss;
controlling traffic according to the determined cause of packet loss;
obtaining a traffic control result; and
correcting the determined cause of packet loss according to a comparison between the obtained traffic control result and an expected traffic control result, so as to control the traffic again, wherein the correcting the determined cause of packet loss according to a comparison between the obtained traffic control result and an expected traffic control result comprises:
obtaining an error correction result of the cause of packet loss according to the comparison, wherein the error correction result is packet loss caused by a bit error or packet loss caused by congestion; and
adding the error correction result to the at least two determining results, and re-performing a step of selecting, according to the at least two determining results and the preset selection algorithm, one from packet loss caused by a bit error and packet loss caused by congestion as the cause of packet loss, so as to obtain the corrected cause of packet loss.

## Patentansprüche

1. Verkehrssteuersystem, wobei das System umfasst:
ein Paketverlust-Ursachenbestimmungsmodul (101), das zum Bestimmen einer Ursache für Paketverlust konfiguriert ist, wobei das Paketverlust-Ursachenbestimmungsmodul (101) umfasst:
ein Paketverlustursachen-Erhaltenssubmodul (1011), das zum separaten Erhalten von mindestens zwei Bestimmungsergebnissen der Ursache des Paketverlustes konfiguriert ist, wobei das Bestimmungsergebnis der Ursache des Paketverlustes ein durch einen Bitfehler verursachter Paketverlust oder ein durch einen Engpass verursachter Paketverlust ist; und
ein gemeinsames Unterscheidungssubmodul (1012), das zum Auswählen gemäß den mindestens zwei Bestimmungsergebnissen und einem voreingestellten Auswahlalgorithmus zwischen einem durch einen Bitfehler verursachten Paketverlust und einem durch einen Engpass verursachten Paketverlust als Ursache für Paketverlust auszuwählen;
ein Verkehrssteuermodul (102), das zum Steuern des Verkehrs gemäß der Ursache des Paketverlusts konfiguriert ist, der durch das Paketverlust-Ursachenbeststimmungsmodul bestimmt wird; und
ein Fehlerkorrekturmodul (103), das konfiguriert ist, um: ein Verkehrssteuerergebnis zu erhalten, das nach dem Steuern des Verkehrs durch das Verkehrssteuermodul erhalten wurde, und gemäß einem Vergleich zwischen dem erhaltenen Verkehrssteuerergebnis und einem erwarteten Verkehrssteuerergebnis die Ursache des Paketverlusts korrigiert, die durch das Paketverlust-Ursachenbestimmungsmodul bestimmt wird, wobei das Fehlerkorrekturmodul (103) umfasst:
ein Steuerergebnis-Erhaltenssubmodul (1031), das zum Erhalten des Verkehrssteuerergebnisses konfiguriert ist, das erhalten wird, nachdem das Verkehrssteuermodul (102) den Verkehr steuert;
ein Fehlerkorrekturergebnis-Erhaltenssubmodul (1032), das zum Erhalten eines Fehlerkorrekturergebnisses der Ursache des Paketverlustes gemäß dem Vergleich zwischen dem erhaltenen Verkehrssteuerergebnis und dem erwarteten Verkehrssteuerergebnis konfiguriert ist, wobei das Fehlerkorrekturergebnis ein durch einen Bitfehler verursachter Paketverlust oder ein durch einen Engpass verursachter Paketverlust ist; und
ein Fehlerkorrekturergebnis-Ausgabesubmodul (1033), das zum Ausgeben des Fehlerkorrekturergebnisses an das Paketverlust-Ursachenbestimmungsmodul (101) konfiguriert ist, so dass das Paketverlust-Ursachenbestimmungsmodul (101) das Fehlerkorrekturergebnis zu den mindestens zwei Bestimmungsergebnissen hinzufügt und den Auswahlschritt erneut durchführt, um die korrigierte Ursache des Paketverlustes zu erhalten.

2. System nach Anspruch 1, wobei das Paketverlust-Ursachenerhaltenssubmodul (1011) konfiguriert ist um:
separat ein Bestimmungsergebnis der Ursache des Paketverlustes gemäß mindestens zwei voreingestellten Paketverlusttypen-Unterscheidungsalgorithmen zu erhalten.

3. System nach Anspruch 1, wobei der voreingestellte Auswahlalgorithmus umfasst:
wenn mehr als die Hälfte der Bestimmungsergebnisse in den mindestens zwei Bestimmungsergebnissen Paketverluste sind, die durch Engpässe verursacht werden, Bestimmen, dass die Ursache des Paketverlustes ein durch einen Engpass verursachter Paketverlust ist; oder wenn nicht mehr als die Hälfte der Bestimmungsergebnisse in den mindestens zwei Bestimmungsergebnissen ein durch einen Engpass verursachter Paketverlust sind, Bestimmen, dass die Ursache des Paketverlustes ein durch einen Bitfehler verursachter Paketverlust ist.

4. System nach Anspruch 1, wobei das Verkehrssteuerergebnis einen bestimmten Parameter umfasst; und
das Fehlerkorrekturergebnis-Erhaltenssubmodul konfiguriert ist, um:
eine Änderungstendenz des spezifizierten Parameters durch Vergleichen eines erhaltenen Wertes des spezifizierten Parameters mit einem erwarteten Wert des spezifizierten Parameters zu erhalten; und aus einem durch einen Bitfehler verursachten Paketverlust und einem durch einen Engpass verursachten Paketverlust die Ursache für Paketverlust auszuwählen, die mit der Änderungstendenz als Fehlerkorrekturergebnis übereinstimmt.

5. System nach Anspruch 1, wobei das Verkehrssteuermodul konfiguriert ist, um:
wenn die bestimmte Ursache für den Paketverlust ein durch einen Engpass verursachter Paketverlust ist, eine Dienstübertragungsrate zu verringern; oder
wenn die bestimmte Ursache für den Paketverlust ein durch einen Bitfehler verursachter Paketverlust ist, eine Dienstübertragungsrate zu erhöhen.

6. Verkehrssteuerverfahren, wobei das Verfahren umfasst:
Bestimmen (S701) einer Ursache für Paketverlust, wobei das Bestimmen (S701) einer Ursache für Paketverlust umfasst:
separates Erhalten (S801) von mindestens zwei Bestimmungsergebnissen der Ursache des Paketverlustes, wobei das Bestimmungsergebnis der Ursache des Paketverlustes ein durch einen Bitfehler verursachter Paketverlust oder ein durch einen Engpass verursachter Paketverlust ist; und
Auswählen (S802), gemäß den mindestens zwei Bestimmungsergebnissen und einem voreingestellten Auswahlalgorithmus zwischen einem durch einen Bitfehler verursachten Paketverlust und einem durch einen Engpass verursachten Paketverlust als Ursache für Paketverlust;
Steuern (S702) des Verkehrs gemäß der bestimmten Ursache des Paketverlusts;
Erhalten (S703) eines Verkehrssteuerergebnisses; und
Korrigieren (S704) der bestimmten Ursache des Paketverlusts gemäß einem Vergleich zwischen dem erhaltenen Verkehrssteuerergebnis und einem erwarteten Verkehrssteuerergebnis, um den Verkehr erneut zu steuern, wobei Korrigieren (S704) der bestimmten Ursache des Paketverlusts gemäß einem Vergleich zwischen dem erhaltenen Verkehrssteuerergebnis und einem erwarteten Verkehrssteuerergebnis umfasst:
Erhalten (S901) eines Fehlerkorrekturergebnisses der Ursache des Paketverlustes gemäß dem Vergleich, wobei das Fehlerkorrekturergebnis ein durch einen Bitfehler verursachter Paketverlust oder ein durch einen Engpass verursachter Paketverlust ist; und
Hinzufügen (S902) des Fehlerkorrekturergebnisses zu den mindestens zwei Bestimmungsergebnissen und erneutes Durchführen eines Schrittes des Auswählens, gemäß den mindestens zwei Bestimmungsergebnissen und dem voreingestellten Auswahlalgorithmus, zwischen einem durch einen Bitfehler verursachten Paketverlust und einem durch einen Engpass verursachten Paketverlust als Ursache für Paketverlust, um die korrigierte Ursache für Paketverlust zu erhalten.

7. Verfahren nach Anspruch 6, wobei das separate Erhalten (S801) von mindestens zwei Bestimmungsergebnissen der Ursache des Paketverlustes umfasst:
separat ein Bestimmungsergebnis der Ursache des Paketverlustes gemäß mindestens zwei voreingestellten Paketverlusttypen-Unterscheidungsalgorithmen zu erhalten.

8. Verfahren nach Anspruch 6, wobei der voreingestellten Auswahlalgorithmus umfasst: wenn mehr als die Hälfte der Bestimmungsergebnisse in den mindestens zwei Bestimmungsergebnissen Paketverluste sind, die durch Engpässe verursacht werden, Bestimmen, dass die Ursache des Paketverlustes ein durch einen Engpass verursachter Paketverlust ist; oder wenn nicht mehr als die Hälfte der Bestimmungsergebnisse in den mindestens zwei Bestimmungsergebnissen ein durch einen Engpass verursachter Paketverlust sind, Bestimmen, dass die Ursache des Paketverlustes ein durch einen Bitfehler verursachter Paketverlust ist.

9. Verfahren nach Anspruch 6, wobei das Verkehrssteuerergebnis einen bestimmten Parameter umfasst; und
das Erhalten (S901) eines Fehlerkorrekturergebnisses der Ursache des Paketverlustes gemäß dem Vergleich umfasst:
Erhalten (S1001) einer Änderungstendenz des spezifizierten Parameters durch Vergleichen eines erhaltenen Wertes des spezifizierten Parameters mit einem erwarteten Wert des spezifizierten Parameters; und
Auswählen (S1002) der Ursache des Paketverlusts, die mit der Änderungstendenz als Fehlerkorrekturergebnis übereinstimmt, zwischen einem durch einen Bitfehler verursachten Paketverlust und einem durch einen Engpass verursachten Paketverlust.

10. Verfahren nach Anspruch 6, wobei das Steuern (S702) des Verkehrs gemäß der bestimmten Ursache des Paketverlustes umfasst:
wenn die bestimmte Ursache für den Paketverlust ein durch einen Engpass verursachter Paketverlust ist, Verringern einer Dienstübertragungsrate; oder
wenn die bestimmte Ursache für den Paketverlust ein durch einen Bitfehler verursachter Paketverlust ist, Erhöhen einer Dienstübertragungsrate.

11. Verkehrssteuersystem, wobei das System mindestens einen Prozessor und mindestens einen Speicher umfasst;
der Speicher zum Speichern eines Programms oder einer Anweisung konfiguriert ist; und
der Prozessor zum Aufrufen des Programms oder der im Speicher gespeicherten Anweisung konfiguriert ist, um die folgenden Operationen auszuführen:
Bestimmen einer Ursache für Paketverlust, wobei das Bestimmen einer Ursache für Paketverlust umfasst:
separates Erhalten von mindestens zwei Bestimmungsergebnissen der Ursache des Paketverlustes, wobei das Bestimmungsergebnis der Ursache des Paketverlustes ein durch einen Bitfehler verursachter Paketverlust oder ein durch einen Engpass verursachter Paketverlust ist; und
Auswählen, gemäß den mindestens zwei Bestimmungsergebnissen und einem voreingestellten Auswahlalgorithmus zwischen einem durch einen Bitfehler verursachten Paketverlust und einem durch einen Engpass verursachten Paketverlust als Ursache für Paketverlust;
Steuern des Verkehrs gemäß der bestimmten Ursache des Paketverlusts;
Erhalten eines Verkehrssteuerergebnisses; und
Korrigieren der bestimmten Ursache des Paketverlusts gemäß einem Vergleich zwischen dem erhaltenen Verkehrssteuerergebnis und einem erwarteten Verkehrssteuerergebnis, um den Verkehr erneut zu steuern, wobei Korrigieren der bestimmten Ursache des Paketverlusts gemäß einem Vergleich zwischen dem erhaltenen Verkehrssteuerergebnis und einem erwarteten Verkehrssteuerergebnis umfasst:
Erhalten eines Fehlerkorrekturergebnisses der Ursache des Paketverlustes gemäß dem Vergleich, wobei das Fehlerkorrekturergebnis ein durch einen Bitfehler verursachter Paketverlust oder ein durch einen Engpass verursachter Paketverlust ist; und
Hinzufügen des Fehlerkorrekturergebnisses zu den mindestens zwei Bestimmungsergebnissen und erneutes Durchführen eines Schrittes des Auswählens, gemäß den mindestens zwei Bestimmungsergebnissen und dem voreingestellten Auswahlalgorithmus, zwischen einem durch einen Bitfehler verursachten Paketverlust und einem durch einen Engpass verursachten Paketverlust als Ursache für Paketverlust, um die korrigierte Ursache für Paketverlust zu erhalten.

## Revendications

1. Système de régulation de trafic, dans lequel le système comprend :
un module de détermination de cause de perte de paquets (101), configuré pour déterminer une cause d'une perte de paquets, dans lequel le module de détermination de cause de perte de paquets (101) comprend :
un sous-module d'obtention de cause de perte de paquets (1011), configuré pour obtenir de manière séparée au moins deux résultats de détermination de la cause d'une perte de paquets, dans lequel le résultat de détermination de la cause d'une perte de paquets est une perte de paquets causée par une erreur sur les bits ou une perte de paquets causée par une congestion ; et
un sous-module de distinction commune (1012), configuré pour sélectionner, en fonction des deux, ou plus, résultats de détermination et d'un algorithme de sélection prédéfini, soit une perte de paquets causée par une erreur sur les bits, soit une perte de paquets causée par une congestion en tant que cause d'une perte de paquets ;
un module de régulation de trafic (102), configuré pour réguler un trafic en fonction de la cause d'une perte de paquets qui est déterminée par le module de détermination de cause de perte de paquets ; et
un module de correction d'erreur (103), configuré : pour obtenir un résultat de régulation de trafic obtenu après que le module de régulation du trafic régule le trafic, et pour corriger, en fonction d'une comparaison entre le résultat de régulation de trafic obtenu et un résultat de régulation de trafic attendu, la cause d'une perte de paquets qui est déterminée par le module de détermination de cause de perte de paquets, dans lequel le module de correction d'erreur (103) comprend :
un sous-module d'obtention de résultat de régulation (1031), configuré pour obtenir le résultat de régulation de trafic obtenu après que le module de régulation de trafic (102) régule le trafic ;
un sous-module d'obtention de résultat de correction d'erreur (1032), configuré pour obtenir un résultat de correction d'erreur de la cause d'une perte de paquets en fonction de la comparaison entre le résultat de régulation de trafic obtenu et le résultat de régulation de trafic attendu, dans lequel le résultat de correction d'erreur est une perte de paquets causée par une erreur sur les bits ou une perte de paquets causée par une congestion ; et
un sous-module de sortie de résultat de correction d'erreur (1033), configuré pour transmettre le résultat de correction d'erreur au module de détermination de cause de perte de paquets (101) de telle sorte que le module de détermination de cause de perte de paquets (101) ajoute le résultat de correction d'erreur aux deux, ou plus, résultats de détermination et effectue à nouveau l'étape de sélection de sorte à obtenir la cause corrigée d'une perte de paquets.

2. Système selon la revendication 1, dans lequel le sous-module d'obtention de cause de perte de paquets (1011) est configuré :
pour obtenir de manière séparée un résultat de détermination de la cause d'une perte de paquets en fonction d'au moins deux algorithmes de distinction de type de perte de paquets prédéfinis.

3. Système selon la revendication 1, dans lequel l'algorithme de sélection prédéfini consiste :
si plus de la moitié des résultats de détermination dans les deux, ou plus, résultats de détermination sont une perte de paquets causée par une congestion, à déterminer que la cause d'une perte de paquets est une perte de paquets causée par une congestion ; si la moitié ou moins de la moitié des résultats de détermination dans les deux, ou plus, résultats de détermination sont une perte de paquets causée par une congestion, à déterminer que la cause d'une perte de paquets est une perte de paquets causée par une erreur sur les bits.

4. Système selon la revendication 1, dans lequel le résultat de régulation de trafic comprend un paramètre spécifié ; et
le sous-module d'obtention de résultat de correction d'erreur est configuré :
pour obtenir une tendance de changement du paramètre spécifié en comparant une valeur obtenue du paramètre spécifié avec une valeur attendue du paramètre spécifié ; et
pour sélectionner, à partir d'une perte de paquets causée par une erreur sur les bits ou d'une perte de paquets causée par une congestion, la cause d'une perte de paquets compatible avec la tendance de changement en tant que résultat de correction d'erreur.

5. Système selon la revendication 1, dans lequel le module de régulation de trafic est configuré :
lorsque la cause déterminée d'une perte de paquets est une perte de paquets causée par une congestion, pour réduire une vitesse de transmission de service ; ou
lorsque la cause déterminée d'une perte de paquets est une perte de paquets causée par une erreur sur les bits, pour augmenter une vitesse de transmission de service.

6. Procédé de régulation de trafic, dans lequel le procédé consiste :
à déterminer (S701) une cause d'une perte de paquets, dans lequel la détermination (S701) d'une cause d'une perte de paquets consiste :
à obtenir de manière séparée (S801) au moins deux résultats de détermination de la cause d'une perte de paquets, dans lequel le résultat de détermination de la cause d'une perte de paquets est une perte de paquets causée par une erreur sur les bits ou une perte de paquets causée par une congestion ; et
à sélectionner (S802), en fonction des deux, ou plus, résultats de détermination et d'un algorithme de sélection prédéfini, soit une perte de paquets causée par une erreur sur les bits, soit une perte de paquets causée par une congestion en tant que cause d'une perte de paquets ;
à réguler (S702) un trafic en fonction de la cause déterminée d'une perte de paquets ; à obtenir (S703) un résultat de régulation de trafic ; et
à corriger (S704) la cause déterminée d'une perte de paquets en fonction d'une comparaison entre le résultat de régulation de trafic obtenu et un résultat de régulation de trafic attendu, de sorte à réguler à nouveau le trafic, dans lequel la correction (S704) de la cause déterminée d'une perte de paquets en fonction d'une comparaison entre le résultat de régulation de trafic obtenu et un résultat de régulation de trafic attendu consiste :
à obtenir (S901) un résultat de correction d'erreur de la cause d'une perte de paquets en fonction de la comparaison, dans lequel le résultat de correction d'erreur est une perte de paquets causée par une erreur sur les bits ou une perte de paquets causée par une congestion ; et
à ajouter (S902) le résultat de correction d'erreur aux deux, ou plus, résultats de détermination et à effectuer à nouveau une étape de sélection, en fonction des deux, ou plus, résultats de détermination et de l'algorithme de sélection prédéfini, soit d'une perte de paquets causée par une erreur sur les bits, soit d'une perte de paquets causée par une congestion en tant que cause d'une perte de paquets de sorte à obtenir la cause corrigée d'une perte de paquets.

7. Procédé selon la revendication 6, dans lequel l'obtention de manière séparée (S801) d'au moins deux résultats de détermination de la cause d'une perte de paquets consiste :
à obtenir de manière séparée un résultat de détermination de la cause d'une perte de paquets en fonction d'au moins deux algorithmes de distinction de type de perte de paquets prédéfinis.

8. Procédé selon la revendication 6, dans lequel l'algorithme de sélection prédéfini consiste :
si plus de la moitié des résultats de détermination dans les deux, ou plus, résultats de détermination sont une perte de paquets causée par une congestion, à déterminer que la cause d'une perte de paquets est une perte de paquets causée par une congestion ; si la moitié ou moins de la moitié des résultats de détermination dans les deux, ou plus, résultats de détermination sont une perte de paquets causée par une congestion, à déterminer que la cause d'une perte de paquets est une perte de paquets causée par une erreur sur les bits.

9. Procédé selon la revendication 6, dans lequel le résultat de régulation de trafic comprend un paramètre spécifié ; et
l'obtention (S901) d'un résultat de correction d'erreur de la cause d'une perte de paquets en fonction de la comparaison consiste :
à obtenir (S1001) une tendance de changement du paramètre spécifié en comparant une valeur obtenue du paramètre spécifié avec une valeur attendue du paramètre spécifié ; et
à sélectionner (S1002), à partir d'une perte de paquets causée par une erreur sur les bits ou d'une perte de paquets causée par une congestion, la cause d'une perte de paquets compatible avec la tendance de changement en tant que résultat de correction d'erreur.

10. Procédé selon la revendication 6, dans lequel la régulation (S702) d'un trafic en fonction de la cause déterminée d'une perte de paquets consiste :
lorsque la cause déterminée d'une perte de paquets est une perte de paquets causée par une congestion, à réduire une vitesse de transmission de service ; ou
lorsque la cause déterminée d'une perte de paquets est une perte de paquets causée par une erreur sur les bits, à augmenter une vitesse de transmission de service.

11. Système de régulation de trafic, dans lequel le système comprend au moins un processeur et au moins une mémoire ;
la mémoire est configurée pour stocker un programme ou une instruction ; et
le processeur est configuré pour invoquer le programme stocké, ou l'instruction stockée, dans la mémoire pour effectuer les opérations suivantes consistant :
à déterminer une cause d'une perte de paquets, dans lequel la détermination d'une cause d'une perte de paquets consiste :
à obtenir de manière séparée au moins deux résultats de détermination de la cause d'une perte de paquets, dans lequel le résultat de détermination de la cause d'une perte de paquets est une perte de paquets causée par une erreur sur les bits ou une perte de paquets causée par une congestion ; et
à sélectionner, en fonction des deux, ou plus, résultats de détermination et d'un algorithme de sélection prédéfini, soit une perte de paquets causée par une erreur sur les bits, soit une perte de paquets causée par une congestion en tant que cause d'une perte de paquets ;
à réguler un trafic en fonction de la cause déterminée d'une perte de paquets ;
à obtenir un résultat de régulation de trafic ; et
à corriger la cause déterminée d'une perte de paquets en fonction d'une comparaison entre le résultat de régulation de trafic obtenu et un résultat de régulation de trafic attendu, de sorte à réguler à nouveau le trafic, dans lequel la correction de la cause déterminée d'une perte de paquets en fonction d'une comparaison entre le résultat de régulation de trafic obtenu et un résultat de régulation de trafic attendu consiste :
à obtenir un résultat de correction d'erreur de la cause d'une perte de paquets en fonction de la comparaison, dans lequel le résultat de correction d'erreur est une perte de paquets causée par une erreur sur les bits ou une perte de paquets causée par une congestion ; et
à ajouter le résultat de correction d'erreur aux deux, ou plus, résultats de détermination et à effectuer à nouveau une étape de sélection, en fonction des deux, ou plus, résultats de détermination et de l'algorithme de sélection prédéfini, soit d'une perte de paquets causée par une erreur sur les bits, soit d'une perte de paquets causée par une congestion en tant que cause d'une perte de paquets de sorte à obtenir la cause corrigée d'une perte de paquets.
